# EUROPÄISCHE PATENTSCHRIFT

(11) **EP 1 145 061 B1**
(45) Veröffentlichungstag und Bekanntmachung des Hinweises auf die Patenterteilung: **16.04.2003**
(21) Anmeldenummer: 99966985.6
(22) Anmeldetag: 21.12.1999
(51) Int. Cl.: G02B 6/38, G02B 6/42

(54) **STECKER FÜR LICHTWELLENLEITER MIT EINEM STECKERGEHÄUSE**
CONNECTOR FOR OPTICAL WAVEGUIDES COMPRISING A CONNECTOR HOUSING
CONNECTEUR POUR GUIDES OPTIQUES AVEC BOITIER DE CONNEXION

(30) Priorität: 22.12.1998 DE 19859351; 12.01.1999 DE 19900781
(43) Veröffentlichungstag der Anmeldung: 17.10.2001
(73) Patentinhaber: Rako Electronic Data Technology GmbH, 67269 Grünstadt (DE)
(72) Erfinder: GRÄSSER, Edmond, D-67269 Grünstadt (DE)
(74) Vertreter: Mierswa, Klaus, Dipl.-Ing.
(86) Internationale Anmeldenummer: EP9910251
(87) Internationale Veröffentlichungsnummer: WO00037979

(56) Entgegenhaltungen:
- WO-A-88/05925
- US-A- 5 037 175
- US-A- 5 071 219

## Beschreibung

### Technisches Gebiet:

Die Erfindung betrifft einen Stecker für Lichtwellenleiter mit einem Steckergehäuse, an dessen einem Ende ein Lichtleiterkabel eingeführt ist und an dessen gegenüberliegendem Ende Ferrule austreten, die jeweils in einem inneren Ferruleeinzelgehäuse gekapselt sind, welches an seinen Gehäuseaußenseiten Verriegelungsmittel trägt, die jeweils mit einem Verriegelungsgegenelement einer Steckergegenkupplung zusammenwirken, wobei die inneren Ferruleeinzelgehäuse jeweils in einem äußeren Ferruleeinzelgehäuse eingefangen und gegenüber diesen in Axialrichtung bewegbar sind, welches bewegungsgekoppelt im Steckergehäuse aufgenommen ist und Mittel besitzt, mit denen die Verriegelung zwischen dem inneren Ferruleeinzelgehäuse und dem Verriegelungsgegenelement der Steckergegenkupplung durch Axialverschiebung des äußeren Ferruleeinzelgehäuses gegen das innere Ferruleeinzelgehäuse in Richtung Kabeleinführende lösbar ist.

### Stand der Technik:

Stecker der eingangs genannten Gattung verbessern die Sicherung gegen ungewolltes Abziehen des Steckers durch unsachgemäße Behandlung. Es hat sich jedoch gezeigt, daß der Lösemechanismus auch dadurch gelöst werden kann, daß am Lichtleitkabel selbst stark gezogen wird. Ein solcher Zug führt auf Grund einer reib- oder kraftschlüssigen Verbindung zwischen Steckergehäuse, Kabel und äußerem Ferruleeinzelgehäuse zu einer Relativbewegung zwischen dem äußeren Ferruleeinzelgehäuse und der Gegenkupplung.

Aus der US 5,315,679 ist ein Doppelstecker für Lichtleiter bekannt, welcher ein erstes Gehäuse sowie zwei zweite Gehäuse und zwei dritte Gehäuse umfaßt. Jedes der beiden zweiten Gehäuse enthält einen Lichtleiter und eine Ferrule, welche an einem Ende des Lichtleiters befestigt ist, wobei die Ferrulen beweglich in den zweiten Gehäusen angeordnet sind. Die zweiten Gehäuse befinden sich jeweils in einem dritten Gehäuse, wobei die beiden dritten Gehäuse beweglich im ersten Gehäuse angeordnet sind.

### Technische Aufgabe:

Der Erfindung liegt die Aufgabe zu Grunde, einen Stecker der gattungsbildenden Art mit einer zuverlässigen Abzugssicherung zu schaffen, welcher nicht versehentlich durch Zug am Kabel abgezogen werden kann.

### Offenbarung der Erfindung und deren Vorteile:

Diese Aufgabe durch einen Stecker für Lichtwellenleiter mit einem Steckergehäuse, an dessen Kabeleinführende ein Lichtleiterkabel eingeführt ist und an dessen gegenüberliegendem Ende Ferrule austreten, die jeweils in einem inneren Ferruleeinzelgehäuse gekapselt sind, welches auf seinen Gehäuseaußenseiten Verriegelungsmittel trägt, die jeweils mit einem Verriegelungsgegenelement einer Steckergegenkupplung so zusammenzuwirken imstande ist, daß eine Verriegelung zwischen dem inneren Ferruleeinzelgehäuse und dem Verriegelungsgegenelement der Steckergegenkupplung erfolgen kann, wobei die inneren Ferruleeinzelgehäuse jeweils in einem äußeren Ferruleeinzelgehäuse eingefangen und gegenüber diesem in Richtung parallel zur Achse des Lichtleiterkabels um einen ersten Verschiebungsweg d1 bewegbar sind, wobei das Ferruleeinzelgehäuse bewegungsgekoppelt im Steckergehäuse aufgenommen ist und Entriegelungsmittel besitzt, mittels derer die Verriegelung durch Axialverschiebung des äußeren Ferruleeinzelgehäuses gegen das innere Ferruleeinzelgehäuse in Richtung Kabeleinführende lösbar ist, wobei zwischen Lichtleiterkabel und innerem Ferruleeinzelgehäuse eine bewegungsgekoppelte, Relativbewegungen zwischen Lichtleiterkabel und innerem Ferruleeinzelgehäuse nicht zulassende Verbindung besteht, die gegenüber dem Steckergehäuse verschiebbar ist.

Die Bewegungskopplung kann bevorzugt sowohl durch Formschluß- als auch durch Reibschlußmaßnahmen verwirklicht werden, z.B. Bewegungskupplung.

In einer bevorzugten Ausführungsform der Erfindung ist die Bewegungskopplung zwischen dem Lichtleiterkabel und dem inneren Ferruleeinzelgehäuse durch eine indirekte formschlüssige Verbindung hergestellt, indem beispielsweise im Steckergehäuse ein inneres Kerngehäuse aufgenommen ist, in dem das Lichtleiterkabel einerseits und die Ferrule andererseits formschlüssig eingefaßt sind und das im Steckergehäuse in Axialrichtung verschieblich angeordnet ist. Zwischen dem Lichtleiterkabel und dem innerem Ferruleeinzelgehäuse ist somit vorteilhaft eine bewegungsgekoppelte gegenüber dem Steckergehäuse verschiebbare Verbindung ausgebildet.

Erfindungsgemäß wird eine auf das Lichtleiterkabel einwirkende Zugkraft über die gegenüber dem Steckergehäuse verschiebbare Verbindung auf das innere Ferruleeinzelgehäuse und nur von dort auf das äußere Ferruleeinzelgehäuse übertragen. Das äußere Ferruleeinzelgehäuse wird somit durch die auf das Lichtleiterkabel einwirkende Zukraft nicht gegenüber dem inneren Ferruleeinzelgehäuse in Richtung zum Steckergehäuse verschoben, so daß die Verriegelung zwischen äußerem Ferruleeinzelgehäuse und Gegenkupplung nicht gelöst wird.

Auf diese Weise ist sichergestellt, daß bei Zug auf das Lichtleiterkabel der Bewegungsablauf der Steckerteile so vorgegeben ist, daß der Lösemechanismus zwischen äußerem Ferruleeinzelgehäuse und den Verriegelungselementen der Steckergegenkupplung nicht zur Wirkung kommen kann. Der Stecker kann somit erfindungsgemäß nur noch über Zug am Steckergehäuse von der Gegenkupplung gelöst werden. Bei Zug am Kabel hingegen, normale Zugkräfte vorausgesetzt, bleibt der Stecker verriegelt und kann nicht von der Gegenkupplung gelöst werden, da der Auslösemechanismus durch Zug am Kabel nicht betätigt wird.

Unterstützt wird diese Eigenschaft dadurch, daß die Bewegungsstrecke im äußeren Ferruleeinzelgehäuse für das darin axial verschieblich aufgenommene innere Ferruleeinzelgehäuse gleich oder kleiner ist als die Bewegungsstrecke im Steckergehäuse für das darin aufgenommene und darin axial verschiebliche Kerngehäuse.

Zweckmäßigerweise ist in einer Ausführungsform das innere Kerngehäuse in Kammern unterteilt, die z.B. eine am Lichtleiterkabel angebrachte Kabelcrimphülse mit Bund und die Ferrule zumindest teilweise formschlüssig aufnehmen. Hierbei ist die Tiefe der den Bund aufnehmenden Kammer so bemessen, daß die Kabelcrimphülse ohne Zeit- oder Wegverzögerung mit der Kammer bewegungsgekoppelt ist, also ohne Schlupf formschlüssig mit dem inneren Kerngehäuse in Verbindung steht. Über diesen Formschluß wird die Zugkraft im wesentlichen eingeleitet, wobei je nach Ausführungsform auch andere Aufnahmestellen für die Kabelteile zur Kraftübertragung beitragen können.

Eine weitere Krafteinleitung kann z.B. mit Hilfe einer weiteren Kammer erfolgen, die von einer Zwischenwand auf der einen und von einer Rückwand auf der anderen Seite begrenzt und in der ein Bund eines am Lichtleiterkabel angebrachten Kabelknickschutzes aufgenommen ist. Um entsprechende Absätze und Vorsprünge zu schaffen, mit denen eine Bewegungsbegrenzung für das Kerngehäuse herzustellen ist, sind die Kammern in einer Ausführungsform stufenförmig hintereinander angeordnet.

Die innerhalb des inneren Kerngehäuses zwischen den Kammern befindlichen Zwischen- und Trennwände sind zweckmäßigerweise mit Durchlässen versehen. In einer weiteren Ausführungsform sind Einzelfasern, die aus dem in den Stecker eingeführten Ende des Lichtleiterkabels austreten, durch eine Kammer des Kerngehäuses geführt, mit ihren freien Enden jeweils an eine Ferrule angeschlossen und von einem Crimpring eingefaßt, der jeweils einen kammerseitigen Bund besitzt, der die kupplungsseitige Stirnwand der Kammer hintergreift. Hierzu weist die Kammerstimwand Ferruleaustrittsöffnungen auf, die im Querschnitt kleiner als der Bund des jeweiligen Ferrulecrimpringes dimensioniert sind. Die Ferrule selbst sind axial unbeweglich in den inneren Ferruleeinzelgehäuse gekapselt .

Damit ist der Formschluß zwischen dem Lichtleiterkabel, dem inneren Kerngehäuse, dem inneren Ferruleeinzelgehäuse und der Ferrule hergestellt.

Das innere Kerngehäuse ist axial verschieblich im Steckergehäuse aufgenommen, wobei unter der axialen Richtungsbezeichnung eine lineare Bewegung parallel zu der vom Kabeleinführende zur Ferrulenaustrittsseite verlaufenden Achse des Steckers verstanden wird.

Das Steckergehäuse weist in einer bevorzugten Ausführungsform einen Schacht auf, in den das Kerngehäuse eingesetzt ist. Der Schacht ist so bemessen, daß das Kerngehäuse innerhalb des Steckergehäuses in axialer Richtung verschiebbar ist, wobei der Schacht so bemessen ist, daß seine quer zur Achsenrichtung verlaufenden Innenwände als Anschlag für die axiale Verschiebung des Kerngehäuses innerhalb des Steckergehäuses fungieren.

Das Steckergehäuse weist in einer bevorzugten Ausführungsform des weiteren an seinem kupplungsseitigen Ende einen Doppelschacht auf, in dem zwei nebeneinander angeordnete Perrule aufgenommen sind. Die äußeren Ferruleeinzelgehäuse sind mit dem Steckergehäuse bewegungsgekoppelt, wobei eine formschlüssige Verbindung am zweckmäßigsten ist.

In einer bevorzugten Ausführungsform der Erfindung kann über das Steckergehäuse ein Aufsatz als Schutzhülse gestülpt werden, um das Steckergehäuse vor Zugriff und davor zu schützen, von der Gegenkupplung abgezogen zu werden. Der Aufsatz ist mit Retentionsmitteln ausgestattet, die mit dem inneren Kerngehäuse verklipst oder verhakt werden können, so daß der Aufsatz der Kerngehäusebewegung folgt. Weitere zweckmäßige Ausgestaltungen der Erfindung sind in den Unteransprüchen angegeben. Der Aufsatz kann nur mit Hilfe eines Entriegelungswerkzeuges wieder entfernt

Das Steckergehäuse, das innere Kerngehäuse und der Aufsatz sind in einer bevorzugten Ausführungsform jeweils aus einer oberen und einer unteren Halbschale zusammengesetzt, wobei die obere und die untere Halbschale jeweils im wesentlichen gleichartig sind.

Kurzbeschreibung der Zeichnung, in der zeigen:
- Figur 1: eine Draufsicht auf einen erfindungsgemäßen Stecker in einer bei abgenommenen oberen Halbschalen des Steckeregehäuses und des Kerngehäuses mit Gegenkupplung gemäß einer bevorzugten Ausführungsform der Erfindung,
- Figur 2: eine Draufsicht auf einen erfindungsgemäßen Stecker mit Aufsatz bei jeweils abgenommenen oberen Halbschalen gemäß einer bevorzugten Ausführungsform der Erfindung,
- Figur 3: eine Draufsicht auf einen erfindungsgemäßen Stecker mit Aufsatz bei jeweils abgenommenen oberen Halbschalen und mit eingreifendem Entriegelungswerkzeug gemäß einer bevorzugten Ausführungsform der Erfindung,
- Figur 4: eine Draufsicht auf das das innere Kerngehäuse eines erfindungsgemäßen Steckers bei abgenommener oberer Halbschale mit eingesetztem Kabel gemäß einer bevorzugten Ausführungsform der Erfindung,
- Figur 5: eine Draufsicht auf das innere Kerngehäuse eines erfindungsgemäßen Steckers mit Aufsatz bei abgenommener oberen Halbschalen mit eingesetztem Kabel, wobei das Steckergehäuse weggelassen wurde, gemäß einer bevorzugten Ausführungsform der Erfindung,
- Figur 6: eine Draufsicht auf das Steckergehäuse bei abgenommener oberer Halbschale mit eingesetzten äußeren Ferruleeinzelgehäusen gemäß einer bevorzugten Ausführungsform der Erfindung,
- Figur 7: eine Draufsicht auf das innere Kerngehäuse bei abgenommener oberer Halbschale gemäß einer bevorzugten Ausführungsform der Erfindung,
- Figur 8: eine Rückansicht des Kerngehäuses gemäß einer bevorzugten Ausführungsform der Erfindung,
- Figur 9: eine Frontansicht des Kerngehäuses gemäß einer bevorzugten Ausführungsform der Erfindung,
- Figur 10: eine Draufsicht auf das Steckergehäuse bei abgenommener oberer Halbschale gemäß einer bevorzugten Ausführungsform der Erfindung,
- Figur 11: eine Rückansicht des Steckergehäuses gemäß einer bevorzugten Ausführungsform der Erfindung,
- Figur 12: eine Frontansicht des Steckergehäuses gemäß einer bevorzugten Ausführungsform der Erfindung,
- Figur 13: eine Aufsicht auf den Aufsatz bei abgenommener oberer Halbschale gemäß einer bevorzugten Ausführungsform der Erfindung,
- Figur 14: eine Rückansicht des Aufsatzes gemäß einer bevorzugten Ausführungsform der Erfindung,
- Figur 15: eine Frontansicht des Aufsatzes gemäß einer bevorzugten Ausführungsform der Erfindung,
- Figur 16: eine perspektivische Darstellung eines erfindungsgemäßen Steckers bei abgenommenen oberen Halbschalen des Steckergehäuses und des inneren Kerngehäuses gemäß einer anderen Ausführungsform der Erfindung,
- Figur 17: eine Draufsicht des Steckers nach Figur 16 bei abgenommenen oberen Halbschalen des Steckergehäuses und des inneren Kerngehäuses,
- Figur 18: eine perspektivische Darstellung des inneren Kerngehäuses eines Steckers nach Figur 16 bei abgenommener oberer Halbschale ,
- Figur 19: eine perspektivische Darstellung des Steckergehäuses nach Figur 16 bei abgenommener oberer Halbschale,
- Figur 20: eine perspektivische Darstellung des Aufsatzes nach Figur 16 bei abgenommener oberer Halbschale.

### Wege zur Ausführung der Erfindung:

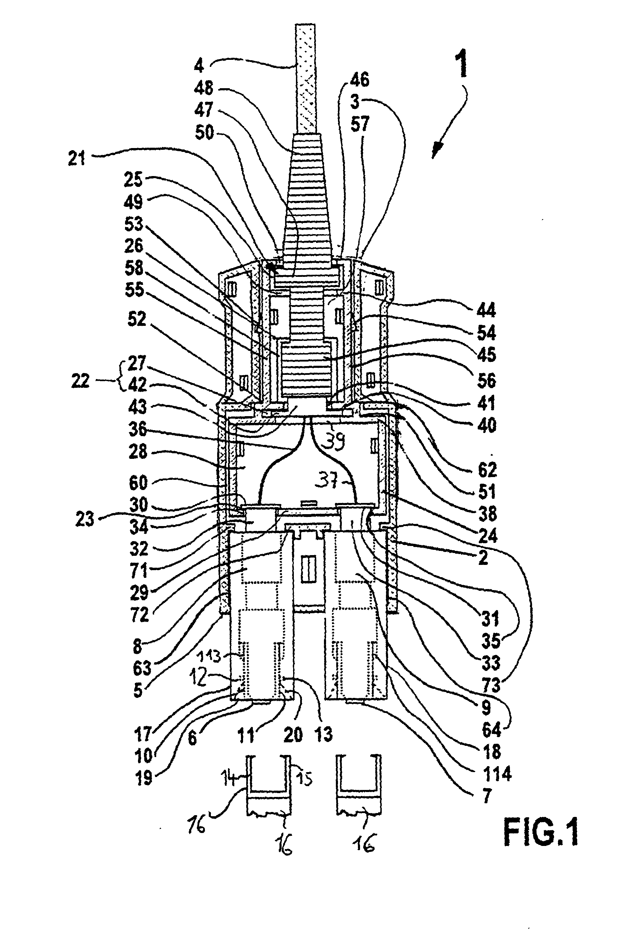

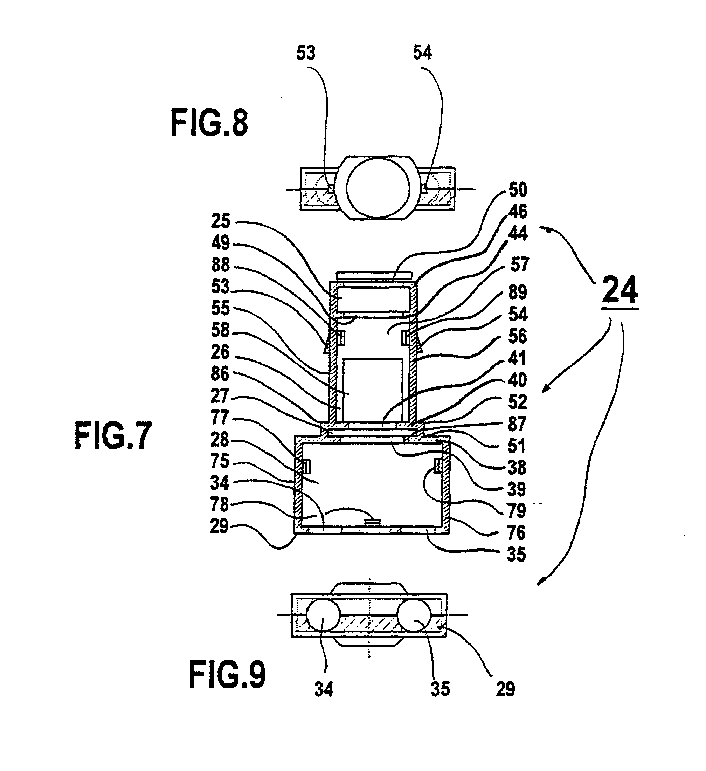

Die Figuren 1 bis 15 zeigen bevorzugte Ausführungsformen der Erfindung. Zunächst werden anhand der Figuren 7 bis 15 die Stecker- und Gehäuseteile gemäß einer ersten Ausführungsform der Erfindung erläutert, bevor anhand der Figuren 1 bis 6 deren funktionelles Zusammenwirken beschrieben wird.

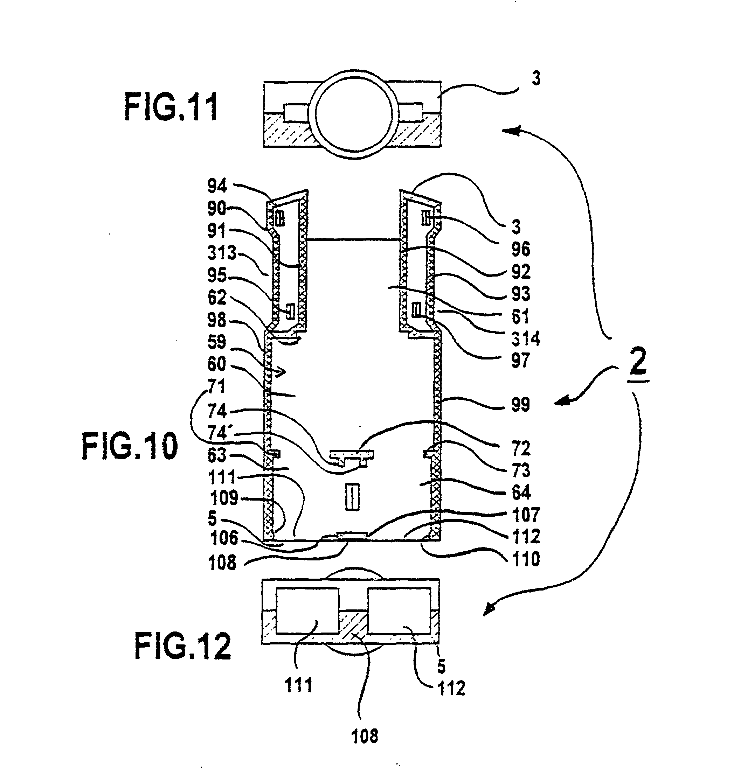

Figur 7 zeigt das innere Kerngehäuse 24 in Draufsicht bei abgenommener oberer Gehäuseschale. Das innere Kerngehäuse 24 ist um einen zweiten Verschiebungsweg d2, der typischerweise ca. 5 mm beträgt, in axialer Richtung verschiebbar im Inneren des Steckerhehäuses 2 (Fig. 10) angeordnet. Das innere Kerngehäuse 24 ist zweckmäßigerweise in Kammern eine erste Kammer 28, eine zweite Kammer 27, eine dritte Kammer 26 und eine vierte Kammer 25, die jeweils eine rechteckige Grundfläche aufweisen, unterteilt. Die Kammer 28 ist in axialer Richtung von einer Stirnwand 29 und einer Kammerwand 38 und seitlich von Außenwänden 75, 76 begrenzt. An drei Wänden der ersten Kammer 28 sind Schnapphaken 77, 78, 79 angeordnet, die mit entsprechenden Gegenstücken der oberen Halbschale des inneren Kerngehäuses zusammengreifen und die beiden Gehäuseschalen zusammenhalten.

An die erste Kammer 28 schließt sich eine schmalere und engere zweite Kammer 27 an, die durch die Kammerwand 38, durch die zu dieser parallel verlaufenden Trennwand 40 und durch die Seitenwände 86, 87 begrenzt ist. An die zweite Kammer 27 schließt sich eine dritte Kammer 26 an, die in axialer Richtung einerseits von der Trennwand 40 und andererseits von einer Zwischenwand 44 begrenzt ist. Die seitlichen Begrenzungen der dritten Kammer 26 werden durch Seitenwände 55, 56 gebildet, an deren Außenseiten Retentionselemente 53, 54 angeordnet sind, auf deren Wirkungsweisen nachfolgend noch näher eingegangen wird. An den Innenseiten der Seitenwände 55, 56 sind weitere Schnapphaken 88, 89 positioniert, die ebenfalls mit entsprechenden Gegenelementen der oberen Halbschale des inneren Kerngehäuses zusammengreifen.

Eine vierte Kammer 25 des inneren Kerngehäuses 24 ist durch die Seitenwände 55, 56, durch die Zwischenwand 44 und eine Rückwand 46 begrenzt. Während die dritte Kammer 26 und die vierte Kammer 25 gleiche Breite aufweisen, weist die zweite Kammer 27 eine größere und die erste Kammer 28 eine nochmals größere Breite auf, so daß die Kammern 28, 27 und 26 stufenförmig hintereinander angeordnet sind, in deren Übergangsbereichen Absätze 51, 52 ausgebildet sind. Diese Absätze 51, 52 werden zumindest teilweise als Anschläge für entsprechende Gegenflächen im Steckergehäuse 2 (Fig. 10) genutzt. Die Rückwand 46, die Zwischenwand 44, die Trennwand 40 und die Kammerwand 38 weisen koaxial zueinander ausgerichtete Durchbrechungen 49, 50, 41, 39 für den Durchtritt von Kabeln bzw. Kabelteilen auf. Die Stirnwand 29 weist zwei Öffnungen 34, 35 für den Austritt von Ferrulen auf.

Figur 8 zeigt eine Rückansicht und Figur 9 eine Frontansicht des Kerngehäuses gemäß einer bevorzugten Ausführungsform der Erfindung. Bei aufgesetzter oberer Halbschale weist die Stirnwand 29 des inneren Kerngehäuses 24 die oben beschriebenen Öffnungen 34, 35 auf.

Figur 10 zeigt das Steckergehäuse 2 in Draufsicht bei abgenommener oberer Halbschale. Das Steckergehäuse 2 enthält einen Schacht 59, der eine Innenform aufweist, die im wesentlichen der Außenkontur des Kerngehäuses 24 (Fig. 7) entspricht, und einen Doppelschacht 63, 64, der die äußeren Ferruleeinzelgehäuse 17, 18 (Fig. 1) aufnimmt. Der Schacht 59 ist in zwei hintereinander angeordnete Fächer 60, 61 unterteilt, deren Übergangsbereich einen Absatz 62 aufweist, der dadurch gebildet wird, daß das Fach 61 schmaler bemessen ist als das Fach 60. Am rückseitigen Ende 3 ist das Steckergehäuse 2 offen. Das Fach 61 ist seitlich durch Doppelwände 90, 91 bzw. 92, 93 begrenzt, zwischen denen jeweils Schnapphaken 94, 95 bzw. 96, 97 angeordnet sind, um das aufzusetzende Gehäuseoberteil festzuhalten. Die Seitenwände 90, 93 weisen Griffmulden 313, 314 auf.

Der Schacht 59 ist seitlich durch Seitenwände 98, 99 begrenzt. Zwischen dem Schacht 59 und dem Doppelschacht 63, 64 sind quer zu den Seitenwänden 98, 99 ausgerichtete Stege 71, 72, 73 angeordnet, die in axialer Richtung als kupplungsseitige Verfahrbegrenzung für das innere Kerngehäuse 24 im Schacht 59 fungieren. In der entgegengesetzten axialen Richtung dient der Absatz 62 als Verfahrbegrenzung für das innrere Kerngehäuse 24 im Schacht 59. An dem Steg 72 sind zwei parallel zu den Seitenwänden 98, 99 ausgerichtete Nasen 74, 74' angeordnet, die als Führung für die Ferruleeinzelgehäuse 17, 18 (Fig. 1) dienen und mit den Kanten 106,107 eines Quersteges 108 fluchten. An den stirnseitigen Enden der Wände 98, 99 stehen vorspringende Nasen 109, 110 in Richtung Quersteg 108 ab.

Figur 11 zeigt eine Rückansicht und Figur 12 eine Frontansicht des Steckergehäuses 2 gemäß einer bevorzugten Ausführungsform der Erfindung. Nachdem das Steckergehäuse 2 durch Aufsetzen der oberen Halbschale geschlossen ist, verbleiben an der Stirnseite 5 des Steckergehäuses 2 zwei Austrittsöffnungen 111, 112 (Fig. 12).

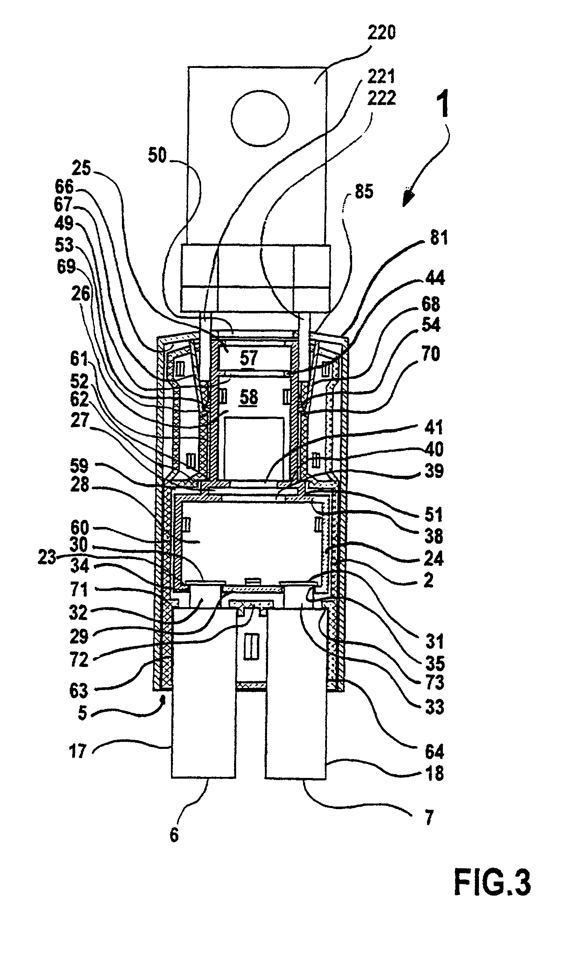

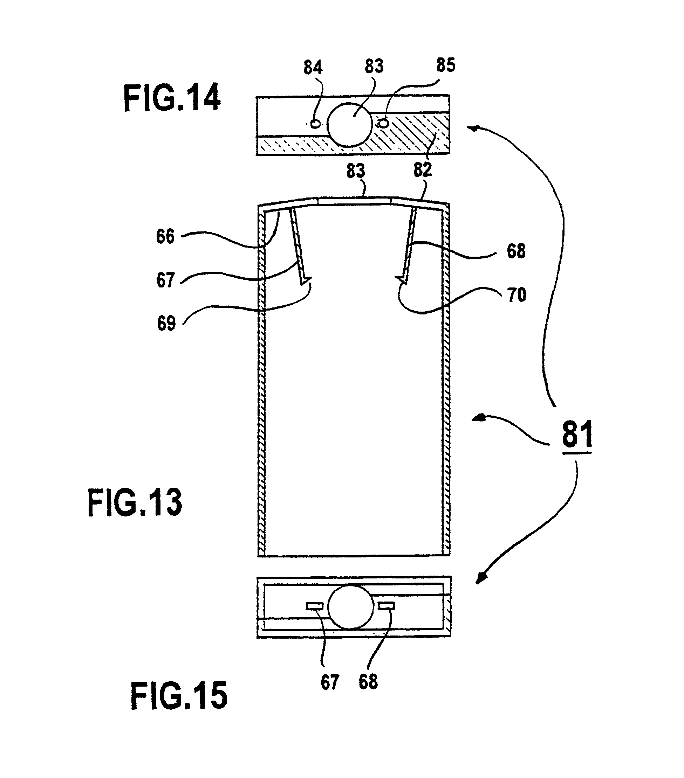

Figur 13 zeigt eine Draufsicht auf den optional verwendbaren Aufsatz 81 bei abgenommener oberer Halbschale. Der Aufsatz 81 kann als Schutzhülse über das Steckergehäuse gestülpt werden, um das Steckergehäuse vor Zugriff und davor zu schützen, von der Gegenkupplung abgezogen zu werden. Der Aufsatz 81 weist an der Innenseite 66 seiner Rückwand 82 angeordnete, zur Kupplungsseite weisende Rückhaltemittel 67, 68 in Form von federnden Armen auf, die an ihren freien Enden nach innen gerichtetete Haken 69, 70 tragen, die die Aufgabe haben, die Retentionselemente 53, 54 an den Außenseiten 55, 56 des inneren Kerngehäuses 24 (Fig. 7) zu hintergreifen. Die Rückwand 82 weist des weiteren eine Kabelöffnung 83 und Werkzeugeinführöffnungen 84, 85 auf (Fig. 14), durch die ein Entriegelungswerkzeug 220 (Fig. 3) eingeführt werden kann. Fig. 15 zeigt eine Frontansicht des Aufsatzes 81. Da dieser keine Stirnwand aufweist, sind auch in dieser Ansicht die Kabelöffnung 83 sowie die Ruckhaltemittel 67, 68 sichtbar.

Die Figuren 1 bis 6 zeigen das mechanische Zusammenwirken der unter Bezug auf die Figuren 7-15 beschriebenen Steckerteile.

Figur 1 zeigt eine Draufsicht auf einen erfindungsgemäßen Stecker in einer bei abgenommenen oberen Halbschalen des Steckeregehäuses und des Kerngehäuses mit Gegenkupplung gemäß einer bevorzugten Ausführungsform der Erfindung,

Wie Figur 1 zeigt, werden die inneren Einzelgehäuse 8, 9, in denen die Ferrule 6, 7 gekapselt sind, mit den Steckergegenkupplungen 16 verriegelt. Dies erfolgt durch das Hintergreifen von Verriegelungsmitteln 12, 13 an den Seitenwänden 10,11 des jeweiligen inneren Ferruleeinzelgehäuses 8,9 durch die in Form von hakenförmigen Fingern ausgebildeten Verriegelungselemente 14,15 der Steckergegenkupplungen 16.

Die inneren Ferruleneinzelgehäuse 8, 9 sind in axialer Richtung beweglich in den äußeren Ferrulenaußengehäusen 17,18 so aufgenommen, daß die inneren Ferruleneinzelgehäuse 8, 9 typpischerweise um einen ersten Verschiebungsweg d1 von ca. 3 bis 4 mm in axialer Richtung gegenüber den äußeren Ferrulenaußengehäusen 17,18 verschoben werden können. Die Seitenflächen der Ferrulenaußengehäuse 17,18 weisen im Bereich der Verriegelungsmittel 12,13 (nicht gezeigte) Öffnungen auf, so daß das die Finger 14, 15 des spangenförmigen Teils 16' der Steckergegenkupplung 16 die Verriegelungsmittel 12, 13 an den Außenseiten 10, 11 der inneren Ferruleeinzelgehäuse 8, 9 hintergreifen können.

Die äußeren Ferruleeinzelgehäuse 17,18 weisen Entriegelungsmittel 19,20 in Form von keilförmigen Rampen auf, deren Spitzen unter die jeweils an den Ferruleeinzelgehäusen 17, 18 angeordneten Nasen 113,114 gleiten, wenn durch Zug am Steckergehäuse 2, mit denen die äußeren Ferruleeinzelgehäuse 17,18 bewegungsgekoppelt sind, diese nach hinten, also von der Steckergegenkupplung 16 weggezogen werden. Diese bereits im Stand der Technik gegebene Funktion ist im Rahmen der Erfindung auch weiterhin gewährleistet, so daß der Stecker 1 auf die im Stand der Technik vorgesehene Weise von der Steckergegenkupplung 16 abgezogen werden kann.

Wird hingegen unsachgemäßerweise am Lichtleiterkabel 4 gezogen, kommt erfindungsgemäß eine Zugsicherung zur Wirkung, deren Funktionsweise nachfolgend erläutert wird. Das Lichtleiterkabel 4 ist in den Stecker 1 eingeführt und erfindungsgemäß lediglich mit dem inneren Kerngehäuse 24 bewegungsgekoppelt verbunden. Im Rahmen der Erfindung ist es zwar auch möglich, zwischen den funktionellen Teilen eine reibschlüssige Verbindung zu schaffen, jedoch erweist sich eine formschlüssige Verbindung als sehr zweckmäßig. Das Kabelende ist im Einführungsbereich des Steckers 1 mit einem Knickschutz 48 bestückt, der mit seinem Bund 47 in der vierten Kammer 25 aufgenommen ist. Entsprechend der Kammertiefe und Bundstärke liegt bereits hier eine erste bewegungsgekoppelte Verbindung 21 vor. In der dritten Kammer 26 ist der Kabelcrimpring 45 aufgenommen, dessen Crimphülse 43 mit seinem Bund 42 in der Kammer 27 formschlüssig aufgenommen ist und damit eine zweite bewegungsgekoppelte Verbindung 22 bildet. Hierzu sind die Öffnungen 41 in der Trennwand 40 und die Öffnung 39 in der Kammerwand 38 jeweils kleiner dimensioniert als der in der zweiten Kammer 27 aufgenommene Bund 42. Ebenso sind die Öffnung 49 in Zwischenwand 44 und die Öffnung 50 in der Rückwand 46 kleiner dimensioniert als der in der ersten Kammer 25 aufgenommene Bund 47.

Aus der Crimphülse 43 treten die Einzelfasern 36, 37 aus. Sie sind durch die Kammer 28 geführt und mit den Ferrulen 6,7 zusammengeschlossen. Die Crimpringe 32,33 hintergreifen unter Bildung einer dritten bewegungsgekoppelten Verbindung 23 mit ihrem Bund 30,31 die Stirnwand 29 der ersten Kammer 28 und ragen durch die Öffnungen 34, 35 in Richtung Kupplung aus der ersten Kammer 28 heraus.

Wird nun ein Zug auf das Lichtleiterkabel 4 ausgeübt, so wird diese Zugkraft über das innere Kerngehäuse 24 auf die inneren Ferruleeinzelgehäuse 8, 9 übertragen. Eine Relativbewegung zwischen äußerem Ferruleeinzelgehäuse 17, 18 und innerem Ferruleeinzelgehäuse 8, 9, die ansonsten den Lösemechanismus bewirkt, ist dadurch bei Zug am Lichtleiterkabel 4 ausgeschlossen.

Erfindungsgemäß wird also eine auf das Lichtleiterkabel 4 einwirkende Zugkraft über die gegenüber dem Steckergehäuse 1 verschiebbare Verbindung auf die innere Ferruleeinzelgehäuse 8, 9 und nur von dort auf die äußeren Ferruleeinzelgehäusen 17, 18 übertragen. Die äußere Ferruleeinzelgehäuse 17, 18 weren somit durch die auf das Lichtleiterkabel 4 einwirkende Zukraft nicht gegenüber den inneren Ferruleeinzelgehäusen 8, 9 in Richtung zum Steckergehäuse 2 verschoben, so daß die Verriegelung zwischen den äußeren Ferruleeinzelgehäuse 17, 18 und den Gegenkupplungen 16 nicht gelöst wird.

Auf diese Weise ist sichergestellt, daß bei Zug auf das Lichtleiterkabel 4 der Bewegungsablauf der Steckerteile so vorgegeben ist, daß der Lösemechanismus zwischen den äußeren Ferruleeinzelgehäusen 17, 18 und den Verriegelungselementen 14, 15 der Steckergegenkupplung 16 nicht zur Wirkung kommen kann. Der Stecker 1 kann somit erfindungsgemäß nur noch über Zug am Steckergehäuse 2 von den Gegenkupplungen 16 gelöst werden. Bei Zug am Kabel 4 hingegen, normale Zugkräfte vorausgesetzt, bleibt der Stecker 2 verriegelt und kann nicht von den Gegenkupplungen 16 gelöst werden.

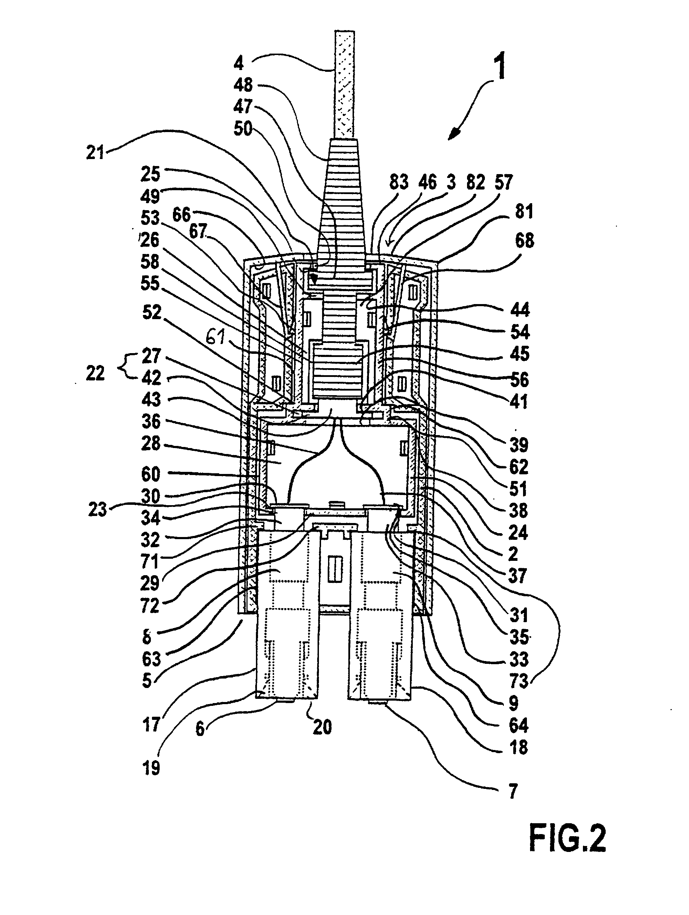

Fig. 2 zeigt eine Draufsicht auf einen erfindungsgemäßen Stecker 1 mit Aufsatz 81 bei jeweils abgenommenen oberen Halbschalen gemäß einer bevorzugten Ausführungsform der Erfindung. Die erfindungsgemäße Funktion des Aufsatzes 81 und seine Verriegelung mit dem inneren Kerngehäuse 24 mit Hilfe von federnden Armen 67, 68, Haken 69, 70 und Retentionselementen 53, 54 wurde bereits unter Bezug auf Fig. 13 beschrieben.

Wie aus Figur 3 hervorgeht, sind beidseits der Kabeldurchführöffnung 83 in der Rückwand 82 des Aufsatzes 81 Öffnungen 84, 85 (Fig. 14) angeordnet, durch die Stifte 221, 222 eines Entriegelungswerkzeuges 220 in das Steckerinnere eingeführt werden. Beim Einführen der Stifte 221, 222 werden die federnde Arme 67, 68 des Aufsatzes 81 nach außen gedrängt, so daß die Haken 69, 70 von den Retentionselementen 53, 54 an den Außenseiten des inneren Kerngehäuses 24 getrennt werden, wodurch der Aufsatz 81 freigegeben wird.

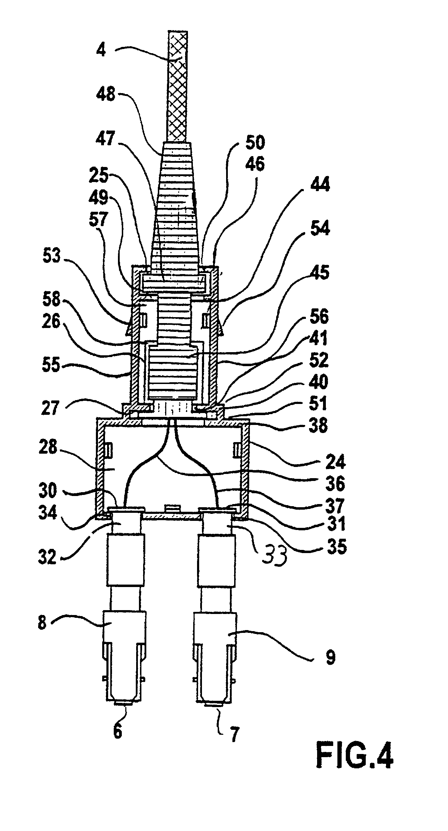

Figur 4 zeigt eine Draufsicht auf das bereits unter Bezug auf 7 beschriebene innere Kerngehäuse 24 eines erfindungsgemäßen Steckers 1 bei abgenommener oberer Halbschale mit eingesetztem Kabel 4 gemäß einer bevorzugten Ausführungsform der Erfindung. Die Einzelfasern 36, 37 sind durch die Kammer 28 geführt und mit den Ferrulen 6,7 zusammengeschlossen. Die Crimpringe 32,33 hintergreifen mit ihrem Bund 30,31 die Stirnwand 29 der ersten Kammer 28 und ragen durch die Öffnungen 34, 35 in Richtung Kupplung aus der ersten Kammer 28 heraus.

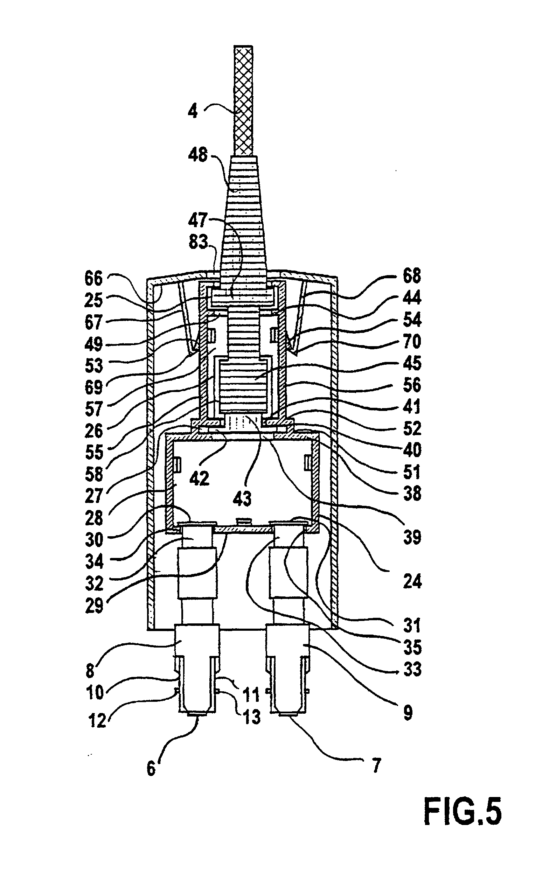

Figur 5 zeigt eine Draufsicht auf das innere Kerngehäuse 24 eines erfindungsgemäßen Steckers 1 mit Aufsatz 81 bei abgenommener oberen Halbschalen mit eingesetztem Kabel. Das Steckergehäuse 2 wurde in Fig. 5 aus Gründen der Übersichtlichkeit weggelassen . Die erfindungsgemäße Funktion des Aufsatzes 81 und seine Verriegelung mit dem inneren Kerngehäuse 24 mit Hilfe von federnden Armen 67, 68, Haken 69, 70 und am inneren Kerngehäuse 24 angeordneten Retentionselementen 53, 54 wurde bereits unter Bezug auf Fig. 13 beschrieben.

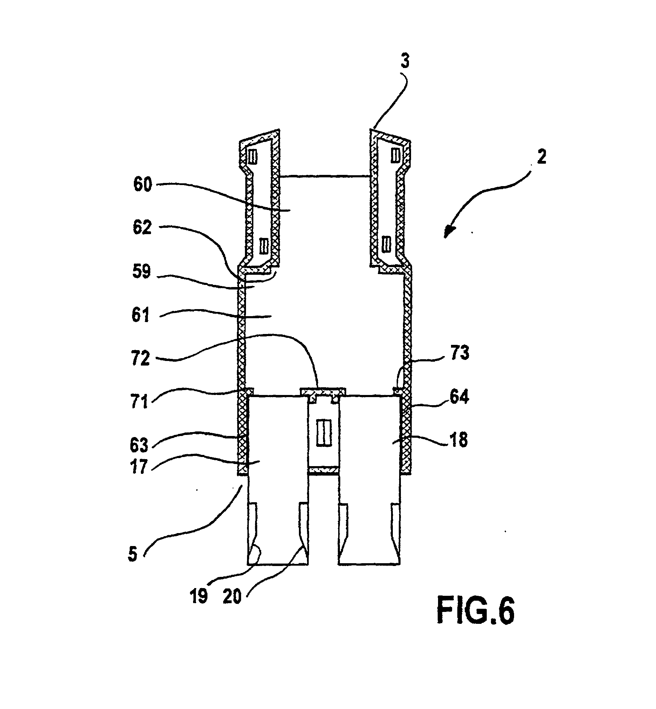

Figur 6 zeigt eine Draufsicht auf das Steckergehäuse 2 bei abgenommener oberer Halbschale mit eingesetzten äußeren Ferruleeinzelgehäusen 17, 18 gemäß einer bevorzugten Ausführungsform der Erfindung. Das innere Kerngehäuse 24 ist in Fig. 6 aus Gründen der Übersichtlichkeit weggelassen.

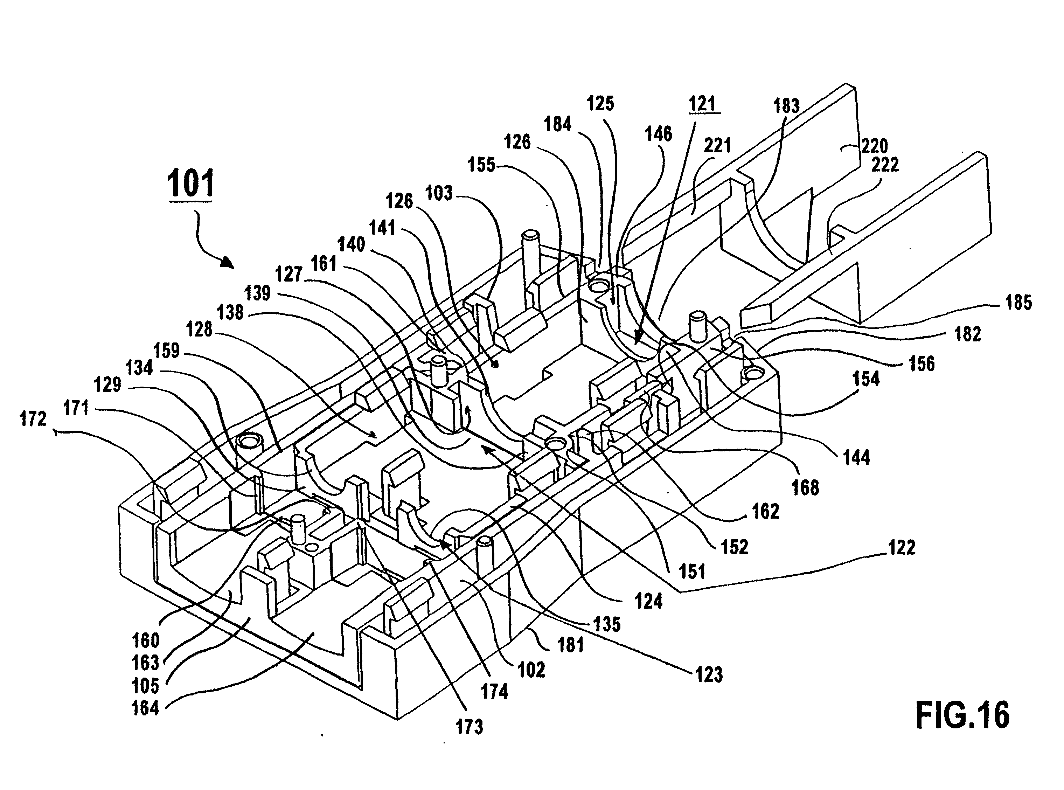

Die Figuren 16 bis 20 zeigen eine andere Ausführungsformder Erfindung, die sich von der unter Bezug auf Fig. 1 bis 15 gezeigten bevorzugten Ausführungsform durch die Verriegelung der jeweils oberen Halbschale mit der unteren Halbschale des Steckergehäuses, des inneren Kerngehäuses und des Aufsatzes unterscheidet. Ferner unterscheidet sich die unter Bezug auf Fig. 16 bis 20 beschriebene Ausführungsform der Erfindung von der unter Bezug auf Fig. 1 bis 15 beschriebenen bevorzugten Ausführungsform durch die Verwendung von Verschlußzapfen und Verschlußmulden , durch die die gegenseitige Lage der jeweils oberen Halbschale gegenüber der unteren Halbschale des Steckergehäuses, des inneren Kerngehäuses und des Aufsatzes gegen Querversatz gesichert ist.

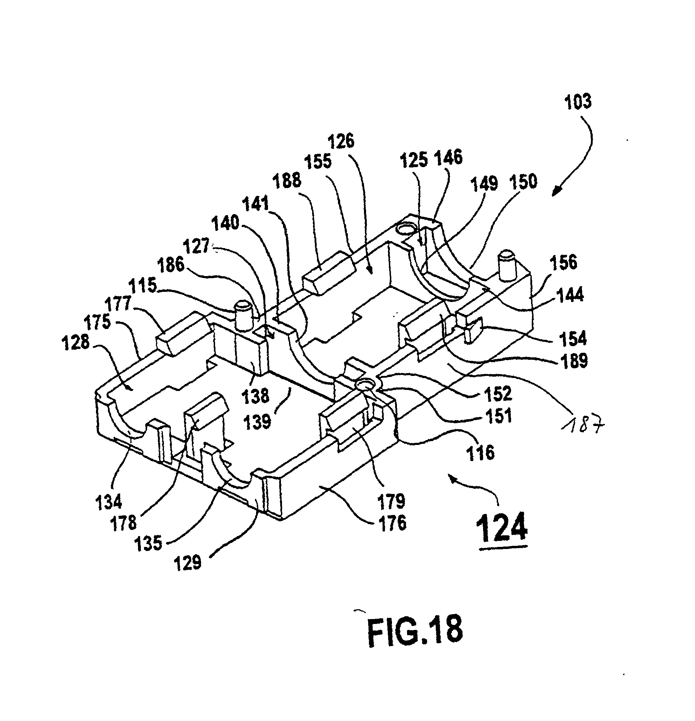

Figur 18 zeigt die untere Halbschale eines inneren Kerngehäuses 124 in perspektivischer Darstellung gemäß einer anderen Ausführungsform der Erfindung. Auch in dieser Ausführungsform ist die obere Halbschale im wesentlichen gleichartig zur unteren Halbschale ausgebildet. Der Aufbau des Kerngehäuses 124 in dieser Ausführungsform der Erfindung ist demjenigen der unter Bezug auf Fig. 7-9 beschriebenen bevorzugten Ausführungsform ähnlich. An den Oberseiten der ausgerundeten Seitenwände 186,187 sind Verschlußzapfen 115 bzw. Mulden 116 angeordnet.

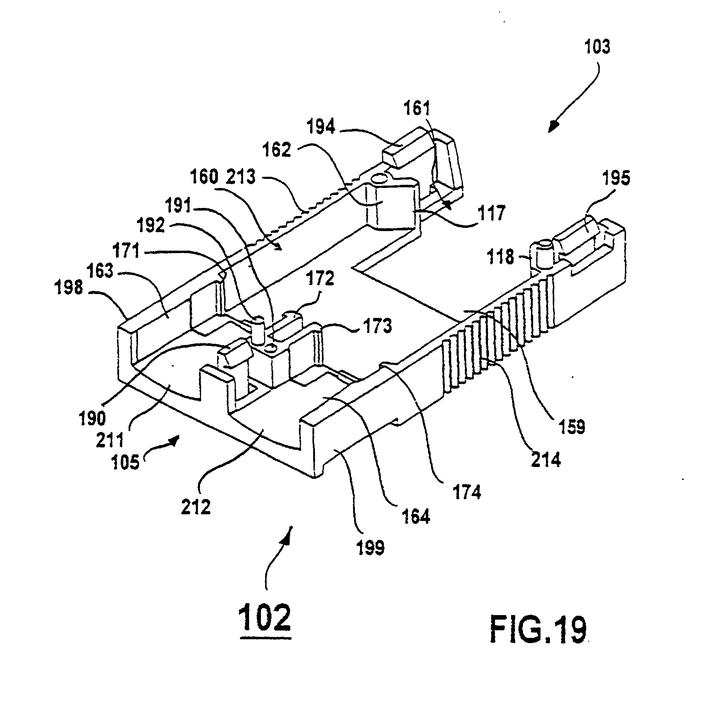

Figur 19 zeigt die untere Halbschale eines Steckergehäuses 102 in perspektivischer Darstellung gemäß einer anderen Ausführungsform der Erfindung. Auch in dieser Ausführungsform ist die obere Halbschale im wesentlichen gleichartig zur unteren Halbschale ausgebildet. Der Aufbau des Steckergehäuses 102 in dieser Ausführungsform der Erfindung ist demjenigen der unter Bezug auf Fig. 10-12 beschriebenen bevorzugten Ausführungsform ähnlich. Im Endabschnitt sind Schnapphaken 194,195 angeordnet, die zusammen mit dem Schnapphaken 190 im Bereich der Doppelkammer und den Zapfen 191 und Mulden 192 das aufzusetzende Gehäuseoberteil festhalten. Die Trennung zwischen dem Schacht 159 und dem kupplungsseitigen Doppelschacht 163,164 besteht aus quer zu den Seitenwänden 198,199 ausgerichteten Nasen 171, 172, 173, 174. Die Seitenwände des Steckergehäuses 2 sind in dieser Ausführungsform der Erfindung mit gerasterten Griffleisten 213, 214 versehen.

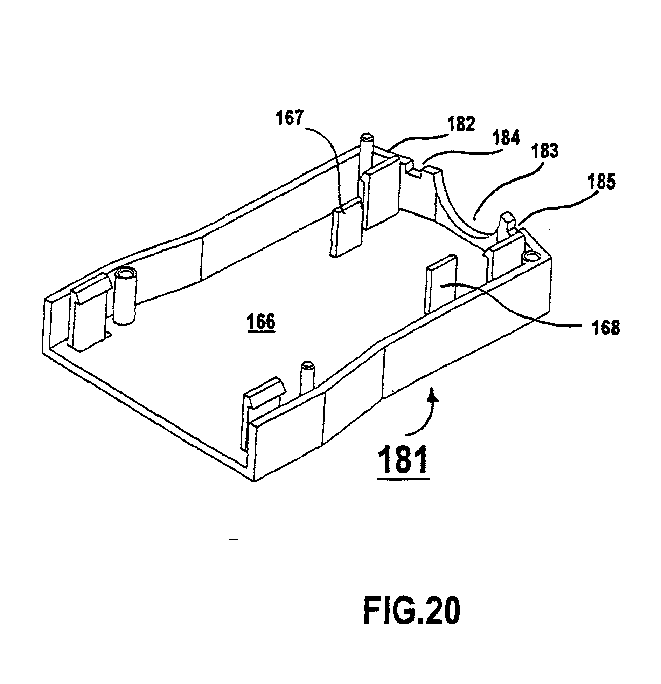

Figur 20 zeigt die untere Halbschale eines Aufsatzes 181 in perspektivischer Darstellung gemäß einer anderen Ausführungsform der Erfindung. Auch in dieser Ausführungsform ist die obere Halbschale im wesentlichen gleichartig zur unteren Halbschale ausgebildet. Der Aufbau des Aufsatzes 181 in dieser Ausführungsform der Erfindung ist demjenigen der unter Bezug auf Fig. 13-15 beschriebenen bevorzugten Ausführungsform ähnlich. Die Rückhaltemittel 167, 168 sind jedoch in der hier in Rede stehenden Ausführungsform als erhabene Stege angeordnet, die vom der Innenseite des Bodens 166 des Aufsatzes 181 abstehen und die Retentionselemente 153, 154 des inneren Kerngehäuses 124 (Fig. 18) hintergreifen.

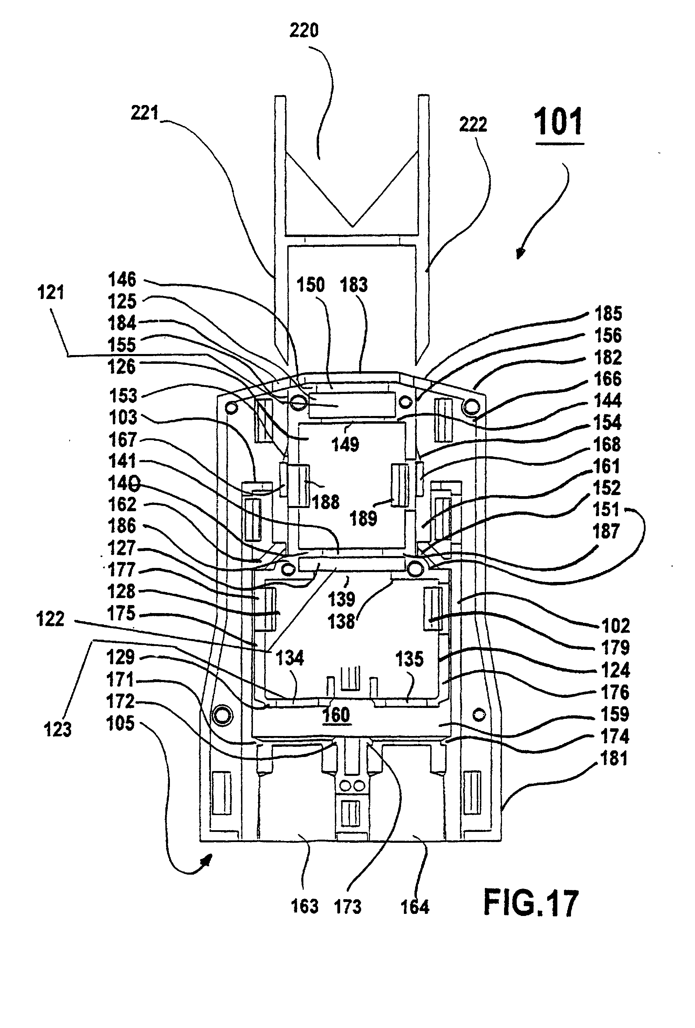

In den Figuren 16 und 17 sind die miteinander montierten Steckerteile inneres Kerngehäuse 124, Steckergehäuse 102 und Aufsatz 181 gemäß einer anderen Ausführungsform der Erfindung perspektivisch dargestellt, wobei die jeweils oberen Gehäuseschalen nicht gezeigt sind. Die Kabelteile sind in diesen Darstellungen nicht gezeigt. Die Entriegelung zwischen dem Aufsatz 181 und innerem Kerngehäuse 124 erfolgt mit dem Werkzeug 220 in der Art, wie dies bereits unter Bezug auf die Figuren 1-15 erläutert wurde

### Gewerbliche Anwendbarkeit:

Der Gegenstand der Erfindung ist insbesondere für Stecker für Lichtwellenleiter gewerblich anwendbar. Der Stecker weist insbesondere die Nützlichkeit auf, daß er nicht versehentlich mit relativ schwacher Zugkraft von der Steckergegenkupplung abgezogen werden kann, weil der Entriegelungsmechanismus durch bloßen Zug auf das Lichtleiterkabel nicht ausgelöst wird.

### Bezugszeichenliste:

- 1: Stecker
- 2: Steckergehäuse
- 3: Rückseitiges Ende v.2
- 4: Lichtleiterkabel
- 5: Stirnseitiges Ende v.2
- 6, 7: Ferrule
- 8, 9: inneres Ferruleinzelgehäuse
- 10, 11: Außenseiten v. 8 und 9
- 12, 13, 14, 15: Verriegelungsmittel v.8/9 sowie 16
- 16: Steckergegenkupplung
- 17, 18: äußeres Ferruleeinzelgehäuse
- 19, 20: Entriegelungsmittel auf 17/18
- 21, 22, 23,: bewegungsgekoppelte Verbindung zw. 4 und 8/9
- 24: inneres Kerngehäuse
- 25, 26, 27, 28: vierte, dritte, zweite, erste Kammer in 24
- 29: Stirnwand v. 24 (kupplungsseitig)
- 30, 31: Bunde an 32 und 33
- 32, 33: Crimpring an 4
- 34, 35: Ferruleaustrittsöffnung in 29
- 36, 37: Einzelfaser v. 4
- 38: Kammerwand in 24
- 39: Durchtrittsöffnung in 38
- 40: Trennwand in 24
- 41: Durchtrittsöffnung in 40
- 42: Bund von 43
- 43: Crimphülse
- 44: Zwischenwand
- 45: Kabelcrimphülse
- 46: Rückwand von 24
- 47: Bund von 48
- 48: Kabelknickschutz
- 49: Durchtrittsöffnung in 44
- 50: Durchtrittsöffnung in 46
- 51, 52: Absatz zw. 28 und 27 und zw. 27 und 26
- 53, 54: Retentionselement auf 24
- 55, 56: Seitenwand von 24
- 57: Innere Bodenseite v. 26
- 58: Mulde auf 57
- 59: Schacht in 2
- 60, 61: Fach v. 59
- 62: Absatz zw. 60,61
- 63, 64: Doppelschacht v. 2
- 66: Innenseite v. 82
- 67, 68: Rückhaltemittel in 81
- 69, 70: Haken
- 71, 72, 73: Steg/Nase v. 102
- 75, 76: Außenwand v.28
- 77, 78, 79: Schnapphaken v.28
- 81: Aufsatz
- 82: Rückwand von 81
- 83: Kabeldurchführöffnung in 82
- 84, 85: Werkzeugeinführöffnung in 82
- 86, 87: Seitenwand v.27
- 88, 89: Schnapphaken in 26
- 90, 91, 92, 93: Doppelwand v.2
- 94, 95, 96, 97: Schnapphaken
- 98, 99: Seitenwand v.2
- 101: Stecker
- 102: Steckergehäuse
- 103: Rückseitiges Ende v.102
- 105: stirnseitiges Ende v.102
- 106, 107: Kante
- 108: Quersteg
- 109, 110: Nasen an 98 und an 99
- 111, 112: Austrittsöffnungen in 2
- 113, 114: Nase aus 8/9
- 115: Verschlußzapfen
- 116: Verschlußmulde
- 117, 118: Arm
- 121, 122, 123: bewegungsgekoppelte Verbindung
- 124: inneres Kerngehäuse
- 125: vierte Kammer in 124
- 126: dritte Kammer in 124
- 127: zweite Kammer in 12
- 128: erste Kammer in 124
- 129: Stirnwand von 124
- 134, 135: Ferruleaustrittsöffnung v.124
- 138: Kammerwand
- 139: Durchtrittsöffnung in 138
- 140: Trennwand in 124
- 141: Durchtrittsöffnung in 140
- 144: Zwischenwand
- 146: Rückwand von 124
- 149: Durchtrittsöffnung in 144
- 150: Durchtrittsöffnung in 146
- 151, 152: Absätze
- 153, 154: Retentionselement
- 155, 156: Seitenwand von 124
- 159: Schacht
- 160, 161: Fach
- 162: Absatz
- 163, 164: Doppelschacht
- 166: Bodeninnenseite v.181
- 167, 168: Rückhaltemittel v.181
- 171, 172, 173, 174: Steg/Nase
- 175, 176: Außenwand v.124
- 177, 178, 179: Schnapphaken v.124
- 181: Aufsatz
- 182: Rückwand v.181
- 183: Kabeldurchführöffnung in 182
- 184, 185: Werkzeugeinführöffnung in 182
- 186, 187: Wand v.124
- 188, 189: Schnapphaken in 126
- 190, 194, 195: Schnapphaken
- 191: Zapfen
- 192: Mulde
- 198, 199: Seitenwand v.102
- 211, 212: Öffnungen in 102
- 213, 214: Griffleiste an 102
- 220: Werkzeug
- 221, 222: Stift von 220
- 313, 314: Griffmulden in 90, 93

## Patentansprüche

1. Stecker (1,101) für Lichtwellenleiter mit einem Steckergehäuse (2,102), an dessen Kabeleinführende (3,103) ein Lichtleiterkabel (4) eingeführt ist und an dessen gegenüberliegendem Ende (5,105) Ferrule (6,7) austreten, die jeweils in einem inneren Ferruleneinzelgehäuse (8,9) gekapselt sind, welches auf seinen Gehäuseaußenseiten (10,11) Verriegelungsmittel (12,13) trägt, die jeweils mit einem Verriegelungsgegenelement (14,15) einer Steckergegenkupplung (16) so zusammenzuwirken imstande ist, daß eine Verriegelung zwischen dem inneren Ferruleneinzelgehäuse (8,9) und dem Verriegelungsgegenelement (14,15) der Steckergegenkupplung (16) erfolgen kann, wobei die inneren Ferruleneinzelgehäuse (8,9) jeweils in einem äußeren Ferruleneinzelgehäuse (17,18) eingefangen und gegenüber diesem in Richtung parallel zur Achse des Lichtleiterkabels (4) um einen ersten Verschiebungsweg d1 bewegbar sind, wobei das äußere Ferruleneinzelgehäuse (17,18) bewegungsgekoppelt im Steckergehäuse (2,102) aufgenommen ist und Entriegelungsmittel (19,20) besitzt, mittels derer die Verriegelung durch Axialverschiebung des äußeren Ferruleneinzelgehäuses (17,18) gegen das innere Ferruleneinzelgehäuse (8,9) in Richtung Kabeleinführende (3,103) lösbar ist, wobei zwischen Lichtleiterkabel (4) und innerem Ferruleneinzelgehäuse (8,9) eine bewegungsgekoppelte, Relativbewegungen zwischen Lichtleiterkabel (4) und innerem Ferruleneinzelgehäuse (8, 9) nicht zulassende Verbindung (21, 22, 23, 121, 122, 123) besteht, die gegenüber dem Steckergehäuse (2, 102) verschiebbar ist.

2. Stecker nach Anspruch 1, **dadurch gekennzeichnet,**
**daß** die bewegungsgekoppelte Verbindung (21, 22, 23, 121, 122, 123) zwischen Lichtleiterkabel (4) und innerem Ferruleneinzelgehäuse (8,9) eine formschlüssige Verbindung ist.

3. Stecker nach Anspruch 1, **dadurch gekennzeichnet,**
**daß** die bewegungsgekoppelte Verbindung (21, 22, 23, 121, 122, 123) zwischen Lichtleiterkabel (4) und innerem Ferruleneinzelgehäuse (8,9) eine reibungsschlüssige Verbindung ist.

4. Stecker nach Anspruch 1 oder 2, **dadurch gekennzeichnet,**
**daß** im Steckergehäuse (2,102) ein in Richtung parallel zur Achse des Lichtleiterkabels (4) verschiebbares inneres Kerngehäuse (24,124) aufgenommen ist, in welchem das Lichtleiterkabel (4) und die Ferrule (6,7) formschlüssig so eingefaßt sind, daß eine auf das Lichtleiterkabel (4) ausgeübte Zugkraft über das innere Kerngehäuse (24, 124) auf die Ferrule (6, 7) übertragen wird.

5. Stecker nach Anspruch 4, **dadurch gekennzeichnet,**
**daß** das innere Kerngehäuse (24,124) eine erste Kammer (28,128) mit einer kupplungsseitigen Stirnwand (29, 129) aufweist, wobei jede Ferrule (6, 7) von einem Crimpring (32,33) eingefaßt ist, der jeweils einen Bund (30,31) besitzt, der die kupplungsseitige Stirnwand (29,129) durch in dieser angeordnete Öffnungen (34, 35) hintergreift.

6. Stecker nach Anspruch 4, **dadurch gekennzeichnet,**
**daß** das innere Kerngehäuse (24, 124) eine zweite Kammer (27, 127) aufweist, in der ein Bund (42) eines am Lichtleiterkabel (4) befestigten Kabelcrimpeinsatzes (43) formschlüssig aufgenommen ist.

7. Stecker nach Anspruch 4, **dadurch gekennzeichnet, daß**
daß das innere Kerngehäuse (24, 124) eine dritte Kammer (26, 126) aufweist, in der eine am Lichtleiterkabel (4) befestigte Kabelcrimphülse (45) formschlüssig aufgenommen ist.

8. Stecker nach Anspruch 4, **dadurch gekennzeichnet,**
**daß** das innere Kerngehäuse (24, 124) eine vierte Kammer (25, 125) aufweist, in der ein Bund (47) eines am Lichtleiterkabel (4) befestigten Kabelknickschutzes (48) formschlüssig aufgenommen ist.

9. Stecker nach Anspruch 7, **dadurch gekennzeichnet,**
**daß** die erste Kammer (28, 128), die zweite Kammer (27, 127) und die dritte Kammer (26, 126) in absteigender Breite stufenartig hintereinander angeordnet sind, wobei zwischen ihnen Absätze (51, 52, 151, 152) ausgebildet sind, die als Anschläge für entsprechende Gegenflächen im Steckergehäuse (2) dienen.

10. Stecker nach Anspruch 4, **dadurch gekennzeichnet,**
**daß** das Steckergehäuse (2, 102) einen zur Aufnahme des inneren Kerngehäuses (24, 124) geeigneten Schacht (59, 159) aufweist, in dem das innere Kerngehäuse (24, 124) in Richtung parallel zur Achse des Lichtleiterkabels (4) verschiebbar aufgenommen ist.

11. Stecker nach Anspruch 10, **dadurch gekennzeichnet,**
**daß** der Schacht (59, 159) in zwei hintereinander angeordnete Fächer (60, 61, 160, 161) unterteilt ist, wobei zwischen den Fächern (60, 61, 160, 161) ein Absatz angeordnet ist.

12. Stecker nach Anspruch 4, **dadurch gekennzeichnet,**
**daß** das Steckergehäuse (2, 102) an seinem kupplungsseitigen Ende einen Doppelschacht (63, 64, 163, 164) aufweist, in dem die äußeren Ferruleneinzelgehäuse (17, 18) aufgenommen sind.

13. Stecker nach Anspruch 11, **dadurch gekennzeichnet,**
**daß** in dem Steckergehäuse (2, 102) in Richtung parallel zur Achse des Lichtleiterkabels (4) eine Verfahrbegrenzung für das innere Kerngehäuse (24, 124) ausgebildet ist, die durch den Absatz (62, 162) und die den Schacht (59, 159) begrenzenden Stege bzw. Nasen (71, 72, 73, 171, 172, 173, 174) gebildet wird.

14. Stecker nach Anspruch 4, **dadurch gekennzeichnet,**
**daß** der Stecker zusätzlich über einen optional als Abzugsschutz verwendbaren Aufsatz (81, 181) verfügt, der schutzhüllenartig über den Stecker (1, 101) gestülpt ist und an dem Rückhaltemittel (67, 68, 167, 168) angeordnet sind, die mit an der Außenseite des innere Kerngehäuse (24,124) angebrachten Retentionselementen (53,54,153,154) so zusammenwirken, daß der Aufsatz (81, 181) mit dem inneren Kerngehäuse (24, 124) verriegelt ist, wobei eine auf den Aufsatz (81, 181) ausgeübte Zugkraft auf das innere Kerngehäuse (24, 124) übertragbar ist.

15. Stecker nach Anspruch 14, **dadurch gekennzeichnet,**
**daß** die Rückhaltemittel (67, 68, 167, 168) federnde Arme (67, 68) sind, an denen Haken (69, 70) angebracht sind.

16. Stecker nach Anspruch 14, **dadurch gekennzeichnet,**
**daß** die Rückhaltemittel (67, 68, 167, 168) erhabene Stege (167, 168) sind, die von der Innenseite des Bodens (166) des Aufsatzes (181) abstehen.

17. Stecker nach Anspruch 14, **dadurch gekennzeichnet,**
**daß** der Aufsatz (81, 181) von dem inneren Kerngehäuse (24, 124) mittels eines Entriegelungswerkzeuges (220), welches die Rückhaltemittel (67, 68, 167, 168) des Aufsatzes (81, 181) von den Retentionselementen (53,54,153,154) löst, wieder lösbar ist.

18. Stecker nach Anspruch 1, **dadurch gekennzeichnet,**
**daß** das Steckergehäuse (2,102) aus zwei miteinander lösbar verbundenen Halbschalen besteht.

19. Stecker nach Anspruch 4, **dadurch gekennzeichnet,**
**daß** das innere Kerngehäuse (24, 124) aus zwei miteinander lösbar verbundenen Halbschalen besteht.

20. Stecker nach Anspruch 14, **dadurch gekennzeichnet,**
**daß** der Aufsatz (81, 181) aus zwei miteinander lösbar verbundenen Halbschalen besteht.

21. Stecker nach Anspruch 4, **dadurch gekennzeichnet,**
**daß** die Bewegungsstrecke im äußeren Ferruleneinzelgehäuse (17, 18) für das darin in einer Richtung parallel zum Lichtleiterkabel (4) verschiebbare innere Ferruleneinzelgehäuse (8, 9) gleich oder kleiner ist als die Bewegungsstrecke im Steckergehäuse (2, 102) für das darin aufgenommene und darin in dieser Richtung verschiebbare Kerngehäuse (24, 124).

## Claims

1. A connector (1, 101) for optical waveguides with a connector housing (2, 102) at whose cable insertion end (3, 103) a fiber optic cable (4) is inserted and at whose opposite end (5, 105) ferrules (6, 7) exit, which are each encapsulated in an inner ferrule individual housing (8, 9) which, on the outsides of the housing (10, 11), has locking means (12, 13), each of which is capable of interacting with a locking counter-element (14, 15) of a connector counter-coupling (16) in such a way that a lock can be effectuated between the inner ferrule individual housing (8, 9) and the locking counter-element (14, 15) of the connector counter-coupling (16), whereby the inner ferrule individual housings (8, 9) are each held in an outer ferrule individual housing (17, 18) and are movable with respect thereto in the direction parallel to the axis of the fiber optic cable (4) by a first movement path d1, said outer ferrule individual housing (17, 18) being accommodated in the connector housing (2, 102) such that it is movement-coupled and has unlocking means (19, 20) by means of which the lock can be released by axially moving the outer ferrule individual housing (17, 18) with respect to the inner ferrule individual housing (8, 9) in the direction of the cable insertion end (3, 103), whereby between the fiber optic cable (4) and the inner ferrule individual housing (8, 9), there is a movement-coupled connection (21, 22, 23, 121, 122, 123) that does not allow relative movements between the fiber optic cable (4) and the inner ferrule individual housing (8, 9) and that can be moved with respect to the connector housing (2, 102).

2. The connector according to Claim 1, **characterized in that**
the movement-coupled connection (21, 22, 23, 121, 122, 123) between the fiber optic cable (4) and the inner ferrule individual housing (8, 9) is a form-fitting connection.

3. The connector according to Claim 1, **characterized in that**
the movement-coupled connection (21, 22, 23, 121, 122, 123) between the fiber optic cable (4) and the inner ferrule individual housing (8, 9) is a frictional connection.

4. The connector according to Claim 1 or 2, **characterized in that**
an inner core housing (24, 124), which is movable in the direction parallel to the axis of the fiber optic cable (4), and in which the fiber optic cable (4) and the ferrules (6, 7) are bordered in a form-fitting manner is accommodated in the connector housing (2, 102) in such a way that a tensile force exerted on the fiber optic cable (4) is transmitted via the inner core housing (24, 124) onto the ferrules (6, 7).

5. The connector according to Claim 4, **characterized in that**
the inner core housing (24, 124) has a first chamber (28, 128) with an end wall (29, 129) on the coupling side, whereby each ferrule (6, 7) is bordered by a crimped ring (32, 33), each of which has a collar (30, 31) that engages behind the end wall (29, 129) on the coupling side through openings (34, 35) arranged in said end wall (29, 129).

6. The connector according to Claim 4, **characterized in that**
the inner core housing (24, 124) has a second chamber (27, 127) in which a collar (42) of a cable crimped insert (43) attached to the fiber optic cable (4) is accommodated in a form-fitting manner.

7. The connector according to Claim 4, **characterized in that**
the inner core housing (24, 124) has a third chamber (26, 126) in which a cable crimped sleeve (45) attached to the fiber optic cable (4) is accommodated in a form-fitting manner.

8. The connector according to Claim 4, **characterized in that**
the inner core housing (24, 124) has a fourth chamber (25, 125) in which a collar (47) of a cable anti-kink means (48) attached to the fiber optic cable (4) is accommodated in a form-fitting manner.

9. The connector according to Claim 7, **characterized in that**
the first chamber (28, 128), the second chamber (27, 127) and the third chamber (26, 126) are arranged one behind the other in a stepped manner in decreasing width, whereby shoulders (51, 52, 151, 152) are formed between them which serve as stops for corresponding counter-surfaces in the connector housing (2).

10. The connector according to Claim 4, **characterized in that**
the connector housing (2, 102) has a shaft (59, 159) that is suitable for accommodating the inner core housing (24, 124), whereby the inner core housing (24, 124) is movably accommodated in said shaft (59, 159) in the direction parallel to the axis of the fiber optic cable (4).

11. The connector according to Claim 10, **characterized in that**
the shaft (59, 159) is divided into two compartments (60, 61, 160, 161) arranged one behind the other, whereby a shoulder is arranged between the compartments (60, 61, 160, 161).

12. The connector according to Claim 4, **characterized in that**,
on its coupling-side end, the connector housing (2, 102) has a double shaft (63, 64, 163, 164) in which the outer ferrule individual housings (17, 18) are accommodated.

13. The connector according to Claim 11, **characterized in that**,
in the connector housing (2, 102), in the direction parallel to the axis of the fiber optic cable (4), a traversing delineation for the inner core housing (24, 124) is created which is formed by the shoulder (62, 162) and by the webs or projections (71, 72, 73, 171, 172, 173, 174) that delineate the shaft (59, 159).

14. The connector according to Claim 4, **characterized in that**
the connector additionally has a cap (81, 181) that can optionally be used as an unplugging protection means, which is placed over the connector (1, 101) like a protective sleeve and on which the retention means (67, 68, 167, 168) are arranged, which interact with the retention elements (53, 54, 153, 154) attached to the outside of the inner core housing (24, 124) in such a way that the cap (81, 181) is locked to the inner core housing (24, 124), whereby a tensile force exerted on the cap (81, 181) can be transmitted onto the inner core housing (24, 124).

15. The connector according to Claim 14, **characterized in that**
the retention means (67, 68, 167, 168) are springy arms (67, 68) to which hooks (69, 70) are attached.

16. The connector according to Claim 14, **characterized in that**
the retention means (67, 68, 167, 168) are raised webs (167, 168) that project from the inside of the bottom (166) of the cap (181).

17. The connector according to Claim 14, **characterized in that**
the cap (81, 181) can be released again from the inner core housing (24, 124) by means of an unlocking tool (220), which releases the retention means (67, 68, 167, 168) of the cap (81, 181) from the retention elements (53, 54, 153, 154).

18. The connector according to Claim 1, **characterized in that**
the connector housing (2, 102) consists of two shells that are releasably connected to each other.

19. The connector according to Claim 4, **characterized in that**
the inner core housing (24, 124) consists of two shells that are releasably connected to each other.

20. The connector according to Claim 14, **characterized in that**
the cap (81, 181) consists of two shells that are releasably connected to each other.

21. The connector according to Claim 4, **characterized in that**
the movement path in the outer ferrule individual housing (17, 18) for the inner ferrule individual housing (8, 9) that can be moved therein in a direction parallel to the fiber optic cable (4) is the same as or smaller than the movement path in the connector housing (2, 102) for the core housing (24, 124) that is accommodated therein and that is movable therein in this direction.

## Revendications

1. Connecteur (1, 101) pour guides optiques avec un boîtier de connexion (2, 102) à l'extrémité d'entrée du câble (3, 103) duquel est introduit un câble à fibres optiques (4) et à l'extrémité opposée (5, 105) duquel sortent des ferrules (6, 7) qui sont chacune encapsulées dans un boîtier individuel de ferrule intérieur (8, 9), lequel porte sur les côtés extérieurs de boîtier (10, 11) des moyens de verrouillage (12, 13) dont chacun est capable d'agir avec un contre-élément de verrouillage (14, 15) d'un contre-couplage de connexion (16) de sorte qu'un verrouillage puisse se produire entre le boîtier individuel de ferrule intérieur (8, 9) et le contre-élément de verrouillage (14, 15) du contre-couplage de connexion (16), les boîtiers individuels de ferrules intérieurs (8, 9) étant chacun pris dans un boîtier individuel de ferrule extérieur et étant mobiles par rapport à ce dernier dans la direction parallèle à l'axe du câble à fibres optiques (4) sur une première course de translation d1, le boîtier individuel de ferrule extérieur (17, 18) étant réceptionné dans le boîtier de connexion (2, 102) couplé à un mouvement et possédant des moyens de déverrouillage (19, 20) au moyen desquels le verrouillage peut être débloqué par le déplacement axial du boîtier individuel de ferrule extérieur (17, 18) par rapport au boîtier individuel de ferrule intérieur (8, 9) dans la direction de l'extrémité d'entrée du câble (3, 103), une jonction (21, 22, 23, 121, 122, 123) couplée à un mouvement existant entre le câble à fibres optiques (4) et le boîtier individuel de ferrule interne (8, 9) n'autorisant pas de mouvements relatifs entre le câble à fibres optiques (4) et le boîtier individuel de ferrule intérieur (8, 9) mais pouvant être déplacée par rapport au boîtier de connexion (2, 102).

2. Connecteur selon la revendication 1, **caractérisé en ce que**
la jonction couplée à un mouvement (21, 22, 23, 121, 122, 123) entre le câble à fibres optiques (4) et le boîtier individuel de ferrule intérieur (8, 9) est une jonction par forme.

3. Connecteur selon la revendication 1, **caractérisé en ce que**
la jonction couplée à un mouvement (21, 22, 23, 121, 122, 123) entre le câble à fibres optiques (4) et le boîtier individuel de ferrule intérieur (8, 9) est une jonction par friction.

4. Connecteur selon l'une quelconque des revendications 1 ou 2, **caractérisé en ce que**
dans le boîtier de connexion (2,102) est logé un boîtier central interne (24, 124) décalable dans le sens parallèle à l'axe du câble à fibres optiques (4) et dans lequel le câble à fibres optiques (4) et la ferrule (6,7) sont encastrés de sorte qu'une force de traction exercée sur le câble à fibres optiques (4) est transmise à la ferrule (6, 7) via le boîtier central interne (24, 124).

5. Connecteur selon la revendication 4, **caractérisé en ce que**
le boîtier central interne (24, 124) présente une première chambre (28, 128) avec paroi frontale (29, 129) tournée côté couplage, chaque ferrule (6, 7) étant sertie dans un crimp (32, 33) dont chacun possède un bord (30, 31) qui a prise à l'arrière de la paroi frontale côté couplage (29, 129) à travers les orifices qui y sont disposés (34, 35).

6. Connecteur selon la revendication 4, **caractérisé en ce que**
le boîtier central interne (24, 124) présente une deuxième chambre (27, 127) dans laquelle est logée en prise géométrique un bord (42) d'un insert de crimp de câble (43) fixé au câble à fibres optiques (4).

7. Connecteur selon la revendication 4, **caractérisé en ce que**
le boîtier central interne (24, 124) présente une troisième chambre (26, 126) dans laquelle est logée en prise géométrique une douille crimp de câble (45) fixée au câble à fibres optiques (4).

8. Connecteur selon la revendication 4, **caractérisé en ce que**
le boîtier central interne (24, 124) présente une quatrième chambre (25, 125) dans laquelle est logé en prise géométrique un bord (47) d'une protection de câble contre la coudure (48) fixée au câble à fibres optiques (4).

9. Connecteur selon la revendication 7, **caractérisé en ce que**
la première chambre (28, 128), la deuxième chambre (27, 127) et la troisième chambre (26, 126) sont disposées l'une derrière l'autre en forme de palier, leur largeur allant diminuant, des retraits (51, 52, 151, 152) étant aménagés entre elles qui servent de butée pour les contre-surfaces correspondantes dans le boîtier de connexion (2).

10. Connecteur selon la revendication 4, **caractérisé en ce que**
le boîtier de connexion (2, 102) présente un puits approprié (59, 159) pour la réception du boîtier central interne (24, 124), puits dans lequel le boîtier central interne (24, 124) est réceptionné en étant déplaçable dans le sens parallèle au câble à fibres optiques (4).

11. Connecteur selon la revendication 10, **caractérisé en ce que**
le puits (59, 159) est subdivisé en deux compartiments disposés l'un derrière l'autre (60, 61, 160, 161), un retrait étant disposé entre les compartiments (60, 61, 160, 161).

12. Connecteur selon la revendication 4, **caractérisé en ce que**
le boîtier de connexion (2, 102) présente en son extrémité côté couplage un puits double (63, 64, 163, 164) dans lequel sont réceptionnés les boîtiers individuels de ferrules extérieurs (17, 18).

13. Connecteur selon la revendication 11, **caractérisé en ce que**
dans le boîtier de connexion (2, 102) dans le sens parallèle à l'axe du câble à fibres optiques (4) est formée une limitation pour l'avance du boîtier central interne (24, 124) qui est formée par le palier (62, 162) et par les traverses ou butoirs (71, 72, 73, 171, 172, 173) qui délimitent le puits (59, 159).

14. Connecteur selon la revendication 4, **caractérisé en ce que**
le connecteur dispose en plus d'un recouvrement (81, 181) optionnel pouvant être utilisé comme protection contre le retrait qui est embouti sur le connecteur (1, 101) comme une sorte d'enveloppe de protection, recouvrement auquel sont appliqués des moyens de retenue (67, 68, 167, 168) qui conjointement aux les éléments de rétention (53, 54, 153, 154) appliqués aux côtés extérieurs du boîtier central interne (24, 124) agissent de sorte que le recouvrement (81, 181) est verrouillé avec le boîtier central interne (24, 124), une force de traction exercée sur le recouvrement (81, 181) pouvant être transmise au boîtier central interne (24, 124).

15. Connecteur selon la revendication 14, **caractérisé en ce que**
les moyens de retenue (67, 68, 167, 168) sont des bras faisant ressort (67, 68) auxquels sont appliqués des crochets (69, 70).

16. Connecteur selon la revendication 14, **caractérisé en ce que** les moyens de retenue (67, 68, 167, 168) sont des traverses en relief (167, 168) qui s'élèvent de l'intérieur du fond (166) du recouvrement (181).

17. Connecteur selon la revendication 14, **caractérisé en ce que**
le recouvrement (81, 181) peut être à nouveau détaché du boîtier central interne (24, 124) au moyen d'un outillage de déverrouillage (220) qui desserre les moyens de retenue (67, 68, 167, 168) du recouvrement (81, 181) des éléments de rétention (53, 54, 153, 154).

18. Connecteur selon la revendication 1, **caractérisé en ce que**
le boîtier de connexion (2, 102) consiste en deux demi-coquilles réunies qui peuvent être détachées l'une de l'autre.

19. Connecteur selon la revendication 4, **caractérisé en ce que**
le boîtier central interne (24, 124) consiste en deux demi-coquilles réunies qui peuvent être détachées l'une de l'autre.

20. Connecteur selon la revendication 14, **caractérisé en ce que**
le recouvrement (81, 181) consiste en deux demi-coquilles réunies qui peuvent être détachées l'une de l'autre.

21. Connecteur selon la revendication 4, **caractérisé en ce que**
la course de déplacement dans le boîtier individuel de ferrule extérieur (17, 18) pour le boîtier individuel de ferrule intérieur (8, 9) qui se déplace dedans dans le sens parallèle au câble à fibres optiques (4) est égale ou inférieure à la course de déplacement à l'intérieur du boîtier de connexion (2, 102) pour le boîtier central (24, 124) réceptionné à l'intérieur et pouvant être déplacé dans ce sens.
